Europäisches Patentamt

European Patent Office

Office européen des brevets

(19)

(11) Publication number: 0 154 072

A2

(12) # EUROPEAN PATENT APPLICATION

(21) Application number: 84304412.4

(22) Date of filing: 28.06.84

(51) Int. Cl.⁴: C 01 B 25/027

(30) Priority: 17.02.84 US 581105

(43) Date of publication of application:
11.09.85 Bulletin 85/37

(84) Designated Contracting States:
AT BE CH DE FR GB IT LI LU NL SE

(71) Applicant: STAUFFER CHEMICAL COMPANY

Westport Connecticut 06881(US)

(72) Inventor: Gersten, Susan Wendy
1504 Old Country Road
Elmsford NY 10523(US)

(72) Inventor: Kuck, Mark Allen
445 Warfield Street
Upper Montclair, N.J. 07043(US)

(74) Representative: Smith, Sydney et al,
Elkington and Fife High Holborn House 52/54 High
Holborn
London WC1V 6SH(GB)

(54) Production of high purity white phosphorus.

(57) A process for the production of high purity phosphorus characterised in that it comprises:

(A) heating high purity red phosphorus *in vacuo* to cause it to vaporize; and

(B) condensing liquid white phosphorus *in vacuo* is disclosed.

Referring to the accompanying illustrative diagram, red phosphorus may be heated in bulb A and condensed in collective bulb G.

The present invention provides advances over the prior art. For example, the clear, colourless phosphorus produced may be utilized as a source of $P_4$ species for chemical vapour deposition, sputtering, vacuum deposition and molecular beam deposition of phosphorus, polyphosphide and other phosphorus compound films for semiconductor and other applications including insulation and passivation.

Croydon Printing Company Ltd.

"Production of high purity white phosphorus"

This invention relates to the production of high purity white phosphorus; it also relates to sources of $P_4$ vapour species; to the deposition of films of phosphorus, polyphosphides and other phosphorus compounds; to chemical vapour deposition, sputtering, vacuum deposition and molecular beam deposition; to semiconductor devices and to the insulation and passivation thereof.

For further information reference may be made to, for example, GB-A- 2,113,663 and to the related applications filed herewith, in particular those based on USSN 581,139, USSN 509,157, USSN 509,175, USSN 581,115, USSN 509,158, USSN 581,103, USSN 581,104, USSN 581,102 and USSN 581,101.

Extremely high purity phosphorus is required in growing films of phosphorus, polyphosphides and other phosphorus compounds by chemical vapour deposition, sputtering, vacuum deposition and molecular beam deposition for use in semiconductor devices. The $P_4$ vapour species utilized in these processes has to be extremely pure. Liquid white phosphorus is a convenient source of this species. It is therefore highly desirable to have a source of high purity white phosphorus. However, high purity white phosphorus is not available commercially.

It is therefore an object of the present invention to provide high purity white phosphorus.

Another object of the present invention is to provide high purity white phosphorus in a form which may be easily utilized as a $P_4$ vapour source for chemical vapour deposition, sputtering, vacuum deposition and molecular beam deposition, for example.

The present invention provides a process for the production of high purity phosphorus characterised in that it comprises:

(A) heating high purity red phosphorus _in vacuo_
to cause it to vaporize; and

(B) condensing liquid white phosphorus _in vacuo_.

Heating (A) is preferably carried out at from 450 to 550°C, more preferably from 480 to 490°C.

Condensing (B) is preferably carried out at substantially below 100°C, more preferably substantially at room temperature.

It is preferred that the condensed liquid white phosphorus product be filtered in an additional step.

For a fuller understanding of the nature and objects of the present invention, reference may be made to the accompanying illustrative drawing which is a schematic diagram of an apparatus for producing high purity white phosphorus according to the present invention.

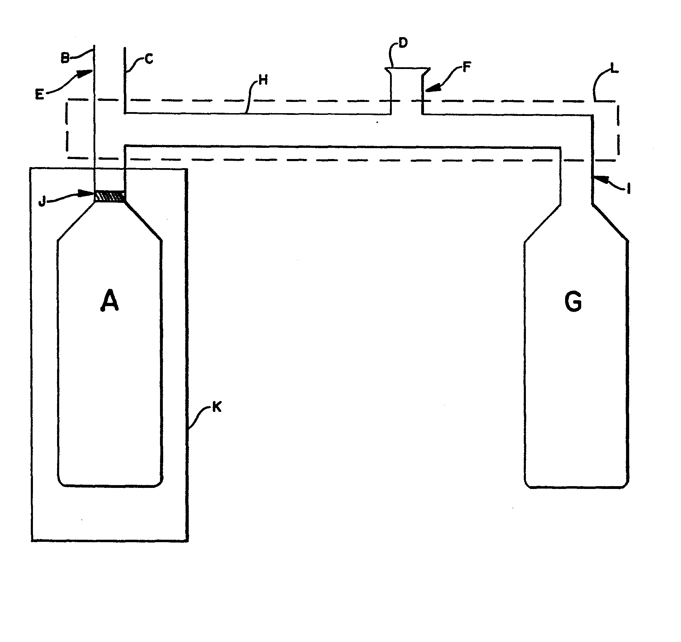

Using a Pyrex glass apparatus of the design illustrated in the accompanying drawing, 25 grams of high purity (99.9999% P) red phosphorus is loaded into bulb A through loading tube B. This transfer is made in a nitrogen-purged glove box. A quartz wool plug J is installed over the red phosphorus. The tube B is stoppered at C and the apparatus is attached to a vacuum line at "O" ring joint D and evacuated to from $10^{-4}$ to $10^{-5}$ Torr (from $1.33 \times 10^{-2}$ Pa to $1.33 \times 10^{-3}$ Pa.). Using an oxygen torch, the loading arm B is collapsed and pulled off at E. Then, the apparatus is isolated from the vacuum line by collapsing the tube at F. Bulb A is then heated to and maintained at a temperature of from 450 to 550°C, preferably from 480 to 490°C, in furnace K. The quartz wool plug J ensures that none of the solid red phosphorus charge passes into transfer tube H. The collection bulb G is maintained below 100°C, preferably at ambient temperature (approximately 20°C). The transfer tube H is maintained at from 100 to 400°C, preferably about 250°C, by a wrap of heating tape L. Complete conversion of the red phosphorus charge to white phosphorus is realized in approximately 3 hours. Using an oxygen torch, the product is isolated by collapsing the tube at I.

A final purification step, to eliminate particles of red phosphorus that sometimes condense in bulb G, involves filtration of the liquid white phosphorus through a Whatman # 50 paper filter mounted in a Swinny filter adapter attached to a gas-tight syringe. This procedure produces a clear, colourless liquid phosphorus which is so pure that it remains liquid at room temperature and is solidified with difficulty by repated tapping on the collection bulb. It has been used, to date, as a starting material for the preparation of phosphorus and polyphosphide films grown by chemical vapour deposition and by sputtering and it may also be used in such a pnictide source for vacuum evaporation and molecular beam deposition. Reference may be made in this connection to the above-mentioned related applications, in particular those based on USSN 581,102 and USSN 581,104.

- 4 -     .                    **0154072**

<u>CLAIMS</u>:

1.    A process for the production of high purity phosphorus characterised in that it comprises:
      (A) heating high purity red phosphorus <u>in vacuo</u> to cause it to vaporize; and
      (B) condensing liquid white phosphorus <u>in vacuo</u>.

2.    A process as claimed in claim 1 wherein heating (A) is carried out at from 450 to 550°C.

3.    A process as claimed in claim 2 wherein heating (A) is carried out at from 480 to 490°C.

4.    A process as claimed in any of claims 1 to 3 wherein condensing (B) is carried out at substantially below 100°C.

5.    A process as claimed in claim 4 wherein condensing (B) is carried out substantially at room temperature.

6.    A process as claimed in any of claims 1 to 5 wherein the liquid white phosphorus product of condensing (B) is filtered.